# EUROPEAN PATENT SPECIFICATION

(11) **EP 2 757 662 B1**
(45) Date of publication and mention of the grant of the patent: **17.06.2015**
(21) Application number: 13151624.7
(22) Date of filing: 17.01.2013
(51) Int. Cl.: H02K 1/16, H02K 3/487, H02K 7/18

(54) **Stator tooth segmentation method for electric machines**
Statorzahnsegmentierverfahren für elektrische Maschinen
Procédé de segmentation de dent de stator de machines électriques

(43) Date of publication of application: 23.07.2014
(73) Proprietor: Siemens Aktiengesellschaft, 80333 München (DE)
(72) Inventor: Wu, Lijian, Sheffield, S6 3NT (GB); Xia, Zhen Ping, Sheffield, S10 5TR (GB)

(56) References cited:
- EP-A1- 0 938 181
- EP-A1- 1 217 714
- EP-A2- 1 215 800
- JP-A- 2004 088 980
- JP-A- 2011 244 673
- US-A1- 2009 218 900
- US-B1- 6 265 804

## Description

### Field of invention

The present invention relates to a stator for an electrical machine and to a wind turbine with the electrical machine. Furthermore, the present invention relates to a method of assembling a stator of an electrical machine.

### Art background

In small electrical machines, such as in electromotors or in generators, small semi-slots are formed along a surface of a stator, into which windings may be inserted. Hence, more flux from permanent magnets is collected which leads to a higher performance. Furthermore, the machine noise and vibration level because of the small openings of the semi-slot may be reduced.

However, in large electric machines, such as in wind power generators which comprise a very large cross-section and a very large conductor cross-section of the windings of the generator, it is preferred to provide large straight teeth which extend from a surface of the stator. Due to the large size of the generator and hence the large size of the cross-section of the conductors for the windings, the windings need to be pre-formed outside of the electrical machine and, in a subsequent step, inserted into the slots between the straight teeth. This may increase the packing and the manufacturing process especially in low speed and high current applications, e.g. in wind power generators.

DE 10 2010 030 877 A1 discloses for example stator teeth which are mountable to a stator ring detachably. The stator teeth comprise a free end section with an ambos-like shape.

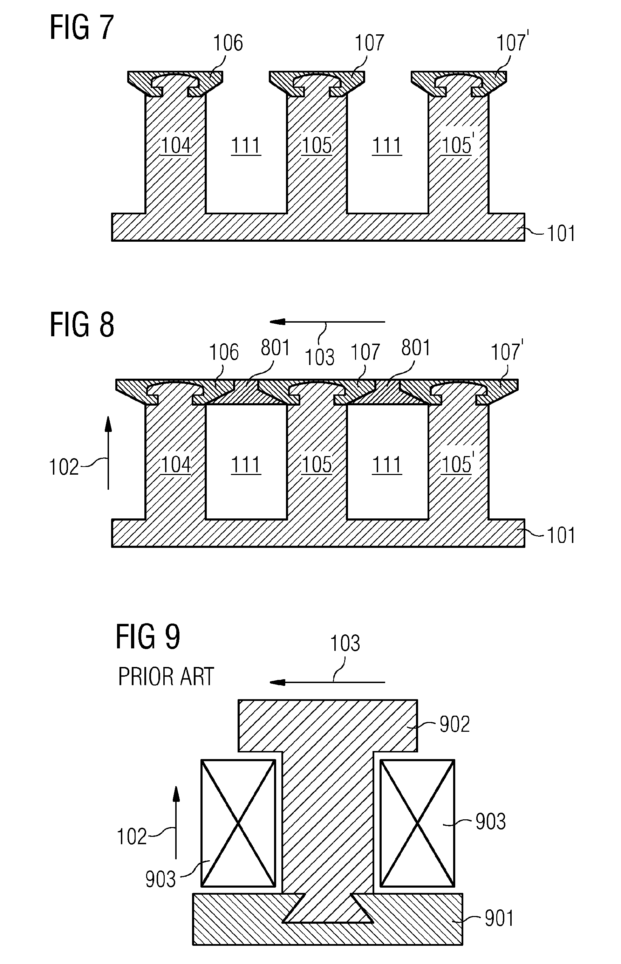

Such a conventional design of a stator comprising stator teeth is shown in Fig. 9. A conventional stator body 901 extends along a circumferential direction 103. Along a radial direction 102, a conventional stator tooth 902 extends from a surface of the conventional stator body 901. The conventional stator tooth 902 comprises a free end with an ambos-like shape. Around the conventional stator tooth 902, a conventional winding 903 is provided.

As can be taken from Fig. 9, the conventional stator tooth 902 together with its free end is formed monolithically and is formed from one piece, respectively. During manufacturing of the stator, the conventional windings 903 are aligned around the conventional stator tooth 902. The complete package, comprising the conventional stator tooth 902 and the conventional winding 903, is pre-assembled and, in a next subsequent step, the package is mounted to the conventional stator body 901. The stator tooth package (comprising of the conventional stator tooth 902 together with the conventional winding 903) is heavy and hence difficult to insert into the conventional stator body 901.

Furthermore, because of the difficult pre-assembling of the conventional stator tooth 902 and the conventional windings 903, it is also complex to mount overlapping windings between adjacent conventional stator teeth 902 before the conventional stator teeth 902 are mounted to the conventional stator body 901. In this case, the whole section of windings (for example three-phase windings) needs to be inserted to the conventional teeth 902 and then connected as a package to the conventional stator body 901.

EP0938181 discloses a three-phase alternating current motor comprising a stator stack having a plurality of stator teeth. Between the stator teeth respective coils are arranged. These coils are fixed by tooth head elements which are attached to a free end of the respective stator teeth.

Similar motors are also disclosed in JP2004088980 and JP2011244673. The document EP1215800 discloses a rotating electrical machine having a stator with an opening for a slot closed by an under plate having a closing member. Finally the document US2009/218900 discloses tooth tips, which fit over teeth and distal ends of fingers formed between slots.

### Summary of the Invention

It may be an object of the present invention to provide a stator for an electrical machine which is simple and efficient to manufacture.

This objective may be solved by a stator for an electrical machine, a wind turbine comprising the electrical machine and by a method of assembling the stator according to the independent claims.

According to a first aspect of the present invention, a stator for an electrical machine is presented. The stator comprises a stator body which has for example a tubular profile with a ring-shaped cross-sectional shape. The stator body is divided along a centre axis of the stator body at least in a first stator segment and a second stator segment. In other words, the stator body is divided along a circumferential direction around the ring-shaped cross-sectional shape. The first stator segment comprises a stator tooth and a tooth tip cover. The stator tooth extends from a surface of the first stator segment along a radial direction and has a free end. The tooth tip cover is mounted to the free end of the stator tooth in a detachable manner.

The electrical machine may be for example an electrical motor or a generator. Specifically, the electrical machine may be a wind power generator of a wind turbine.

The stator for the electrical machine may be for example a stator which surrounds a rotor of the electrical machine or may be a stator which is surrounded by the rotor of the electrical machine.

The stator body of the stator generally comprises a tubular profile with a ring-shaped cross-sectional shape. In the meaning of the present application, the ring-shaped cross-sectional shape may be a circular ring but may be a rectangular or polygonal ring which comprises edges. Elliptical cross-sectional shapes are also possible.

The stator comprises a center axis which is generally coaxial with a rotary axis of the rotor of the electrical machine. Around the center axis and for example along a surface of the tubular profile of the stator body, a circumferential direction is defined. Furthermore, a radial direction runs from the stator body to the center axis, wherein the radial direction is perpendicular to the circumferential direction and the centre axis and runs through the center axis.

The stator body is divided along a centre axis of the stator at least into a first stator segment (i.e. shell) and a second stator segment (i.e. shell). This means, that the stator body consists of a plurality of stator segments, i.e. a plurality of stator shells. In other words, the stator body comprises a dividing line which extends at least along a dividing direction which comprises a component which is parallel to the center axis.

The stator body and hence the respective stator segments consist of a plurality of stator laminator sheets which are arranged one after another along the center axis. In other words, the stator laminaton sheets form a stator lamination.

The first stator segment comprises the stator tooth and the tooth tip cover. The stator tooth extends from a surface of the first stator segment generally along the radial direction. The stator tooth may extend along a radial direction which directs to the center axis or which directs to a counter-direction to the center axis. In other words, the stator tooth may be arranged along the radially inner side of the respective stator segment or may be arranged along the radially outer side of the respective stator segment.

In an exemplary embodiment, windings of e.g. a stator are arranged around the stator tooth. At the free end of the stator tooth, a tooth tip cover is detachably arranged.

Specifically, the tooth tip cover has a larger extension along the circumferential direction than an extension of the stator tooth along the circumferential direction. Hence, the tooth tip cover forms a kind of back taper or an offset, such that the windings may not slide along the surface of the stator tooth and slips over the free end. By the tooth tip cover, the winding is kept between the tooth tip cover and the surface of the respective stator segment.

Specifically, the tooth tip cover may have the same material as the stator tooth. Alternatively, the material of the tooth tip cover may differ to the stator tooth, wherein the magnetic characteristics of the materials of the stator tooth and tooth tip cover may be (almost) similar.

The first stator segment and the second stator segment may be mounted together in a detachable manner. For example, the first stator segment and the second stator segment may be connected by a tongue and groove connection, for example. Alternatively, the first stator segment and the second stator segment may be welded, screwed or glued together, for example.

By the present invention, lightweight stator packages may be pre-assembled before the packages are mounted together to form the stator. In particular, the stator body consists of a plurality of stator segments. Each stator segment may be pre-assembled before the e.g. first stator segment is mounted to the second stator segment. Furthermore, by the approach of the present invention, it is not longer necessary to mount the windings of the stator to the stator tooth before the stator tooth is mounted to the stator body. By the approach of the present invention, the stator teeth are formed monolithically with the stator body or are already attached to the stator body before the windings are attached to the stator tooth. After the windings are attached to the stator tooth and to the stator body, respectively, the tooth tip cover is mounted to the free end of the respective tooth tips.

In contrary to this, according to the conventional approach, the stator teeth together with the windings have to be mounted to the stator body. The stator teeth together with the windings comprise a heavy weight so that the handling of such a package is very difficult. In contrary, according to the present approach of the invention, the windings may be attached to the stator teeth which are formed to the stator body and finally only a lightweight tooth tip cover is applied to the free ends of the respective stator tooth in order to provide a protection against a disengagement of the windings.

Summarizing, only the tooth tip cover needs to be inserted to the stator tooth and the stator body, respectively, after the windings have been attached to the respective teeth. The tooth tip cover is significantly lighter and therefore much easier to handle than the handling of the complete stator teeth together with the winding when mounting the teeth to the stator body. The stator of the present invention is also applicable to an integer slot machine as an electrical machine with overlapping windings, for example. Hence, the above-discussed stator is applicable to both, fractional machine topology and integer machine topology.

According to a further exemplary embodiment, the tooth tip cover and the stator tooth form a tongue and groove connection, in particular a dovetail connection.

For example, the stator tooth comprises at its free end a tongue element, wherein the tooth tip cover comprises a groove which has a complementary shape with respect to the tongue element such that the tongue and groove connection is established.

Hence, the tooth tip cover and the stator tooth may comprise a form-fit connection by the tongue and groove connection. Hence, a robust and flexible (detachable) connection between the tooth tip cover and the stator tooth is provided.

Alternatively, the tooth tip cover may comprise a tongue element and the tooth tip cover comprises the tongue which is engaged by the groove.

According to the invention the first stator segment comprises a further stator tooth and a further tooth tip cover. The further stator tooth extends from the surface of the first stator segment along the radial direction and has a further free end. The further stator tooth tip is arranged adjacent to the stator tooth tip along the circumferential direction so that a slot between the tooth tip and the further tooth tip is formed. The further tooth tip cover is mounted to the further free end of the further stator tooth in a detachable manner, e.g. by the above-described tongue and groove connection.

In other words, along the circumferential direction a plurality of stator teeth is arranged one after another, wherein slots between two respective teeth are formed. The above-described windings are arranged into the slots, for example.

The tooth tip cover contacts in an exemplary embodiment of the present invention the further tooth tip cover.

According to the invention the tooth tip cover and the further tooth tip cover are formed in such a way that a gap between the tooth tip cover and the further tooth tip exists,
said gap is closed by a gap cover element which is inserted between the tooth tip cover and the further tooth tip cover. Specifically, the gap cover element may consist of a material which comprises poor or low magnetic characteristics. For example, the gap cover element may be formed of resin which is injected in a liquid state into the gap and the slot, wherein the resin forms the gap cover element after hardening of the liquid resin. Furthermore, the gap cover element may form a wedge-like shape.

According to a further exemplary embodiment, the second stator segment may comprise similar stator teeth and respective tooth tip covers as above described for the first stator segment.

By the above-described stator for an electrical machine, a more efficient and simple method of assembling a stator may be provided. As described above, the stator body has a tubular profile with a ring-shaped cross-sectional shape, wherein the stator body is divided along a centre axis of the stator at least in a first stator segment and a second stator segment. The first stator segment comprises a stator tooth and a tooth tip cover, wherein the stator tooth extends from a surface of the first stator segment along a radial direction and has a free end.

According to the method, the tooth tip cover is mounted to the free end of the stator tooth in a detachable manner, and the first stator segment is mounted to the second stator segment.

According to the method, the first stator segment comprises a further stator tooth and a further tooth tip cover, wherein the further stator tooth extends from the surface of the first stator segment along the radial direction and has a further free end, wherein the further tooth tip is arranged in a detachable manner adjacent to the tooth tip cover along the circumferential direction such that a slot between the tooth tip cover and the further tooth tip cover is formed and wherein a gap cover element is inserted between the tip cover and the further tooth tip cover for closing the gap.

According to the method, a winding is inserted into the slot before mounting the tooth tip cover to the free end of the stator tooth. Then, the tooth tip cover is mounted to the free end of the stator tooth in a detachable manner. Next, in a subsequent step, the further tooth tip cover is mounted to the further free end of the further stator tooth.

Specifically, according to a further exemplary embodiment, the first stator segment is mounted to the second stator segment after the tooth tip cover is mounted to the free end of the stator tooth.

Hence, according to the above-described method, the first stator segment may be pre-assembled with the windings and the tooth tip cover before the first stator segment is mounted to the second stator segment.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a cross-section of a stator according to an exemplary embodiment of the present invention;
Fig. 2 shows an enlarged view of a section of a stator comprising the stator body, the stator tooth and the tooth tip cover according to an exemplary embodiment of the present invention;
Fig. 3 to Fig. 7 show schematical views of exemplary embodiments of a tongue and groove connection between the tooth tip cover and the stator tooth according to exemplary embodiments of the present invention;
Fig. 8 shows a schematical view of a gap cover element according to an exemplary embodiment of the present invention; and
Fig. 9 shows a schematical view of a conventional stator body and a conventional stator tooth.

### Detailed Description

The illustrations in the drawings are schematic. It is noted that in different figures similar or identical elements are provided with the same reference signs.

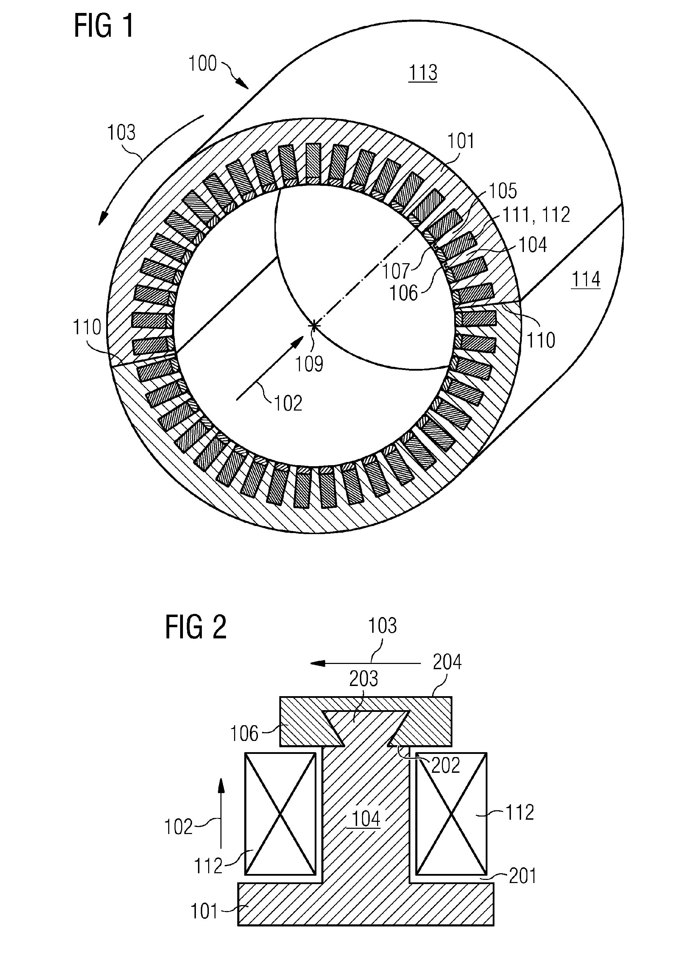

Fig. 1 shows a stator for an electrical machine according to an exemplary embodiment of the present invention. The electrical machine may be a generator for a wind turbine, for example. The stator comprises a stator body 101 which comprises a tubular profile with a ring-shaped cross-sectional shape. The stator body 101 is divided along a circumferential direction 103 around the ring-shaped cross-sectional shape at least in a first stator segment 113 and a second stator segment 114 (see dividing line 110). As shown in Fig. 1, the stator body 101 may be divided along a centre axis 109 of the stator body 101 in two half shells, one half shell forming the first stator segment 113 and the other half shell forming the second stator segment 114. Alternatively, the stator body may be divided as well in three or more respective stator segments.

Furthermore, the first stator segment 113 comprises at least a stator tooth 104 and a tooth tip cover 106. The stator tooth 104 extends from a surface 201 (see Fig. 2) of the first stator segment 113 along a radial direction 102 and has a free end 202 (see Fig. 2). The stator tooth 104 extends in the exemplary embodiment shown in Fig. 1 from the radially inner side of the stator body 101 to the direction of the center axis 109. Alternatively, the stator tooth 104 may also extend from a radially outer side of the stator body away from the center axis 109, for example.

The center axis 109 is for example coaxial with a rotary axis of a rotor of the electrical machine. Hence, the circumferential direction 103 directs around the center axis 109. The radial direction 102 runs through the center axis 109 and is perpendicular to the center axis 109 and the circular direction 103.

A tooth tip cover 106 is mounted to the free end 202 (see Fig. 2) of the stator tooth 104 in a detachable manner.

Furthermore, a further stator tooth 105 and a further tooth tip cover 107 are arranged adjacent to the stator tooth 104 and the tooth tip cover 106 along the circumferential direction 103 such that a slot 111 between the stator tooth 104 and the further stator tooth 105 is formed. The further tooth tip cover 107 is mounted to the further free end of the further stator tooth 105 in a detachable manner. Respective windings 112 are attached into the slots 111. For clarity reasons, not all stator teeth and tooth tip covers are indicated by reference signs in Fig. 1.

The second stator segment 114 may comprise respective stator teeth and respective tooth tip covers similar to the stator teeth 104, 105 and tooth tip covers 106, 107 of the first stator segment 113.

Furthermore, as can be taken from Fig. 1, the first stator segment 113 and the second stator segment 114 are divided along the dividing line 110. The dividing line comprises a dividing direction which has a component that is parallel to the center axis 109.

Fig. 2 shows a more detailed view of a stator tooth 104 and the tooth tip cover 106. The stator tooth 104 may be integrally formed with the stator body 101 and extends along the radial direction 102. Specifically, the stator tooth 104 extends from the surface 201 of the stator body 101. The stator tooth 104 comprises a free end 202. The tooth tip cover 106 is coupled to the stator tooth 104 by a tongue and groove connection. In the exemplary embodiment in Fig. 2, the tongue and groove connection is a dovetail connection. Hence, from the free end 202, a tongue element 203 extends. The tooth tip cover 106 comprises a groove 204 which has a complementary shape with respect to the tongue element 203. Hence, the tongue element 203 is insertable into the groove 104 in a form-fit manner such that the tongue and groove connection is formed.

Specifically, the tooth tip cover 106 has a larger extension along the circumferential direction 103 than an extension of the stator tooth 104 along the circumferential direction 103. In other words, the stator tooth 104 comprises along the circumferential direction 103 a first dimension and the tooth tip cover 106 comprises along the circumferential direction 103 a second dimension, wherein the second dimension is larger than the first dimension. Hence, around the stator tooth 104, windings 112 are arranged between tooth tip cover 106 and the stator body 101. Hence, due to the protruding section of the tooth tip cover 106 from the stator tooth 104 along the circumferential direction 103, the windings 112 cannot slide along the radial direction 102 and leave the stator tooth 104.

Specifically, according to the present invention, before the tooth tip cover 106 is mounted to the free end 202 of the stator tooth 104, the windings 112 may be attached. In a subsequent step, the smaller and lightweight tooth tip covers 106 are attached.

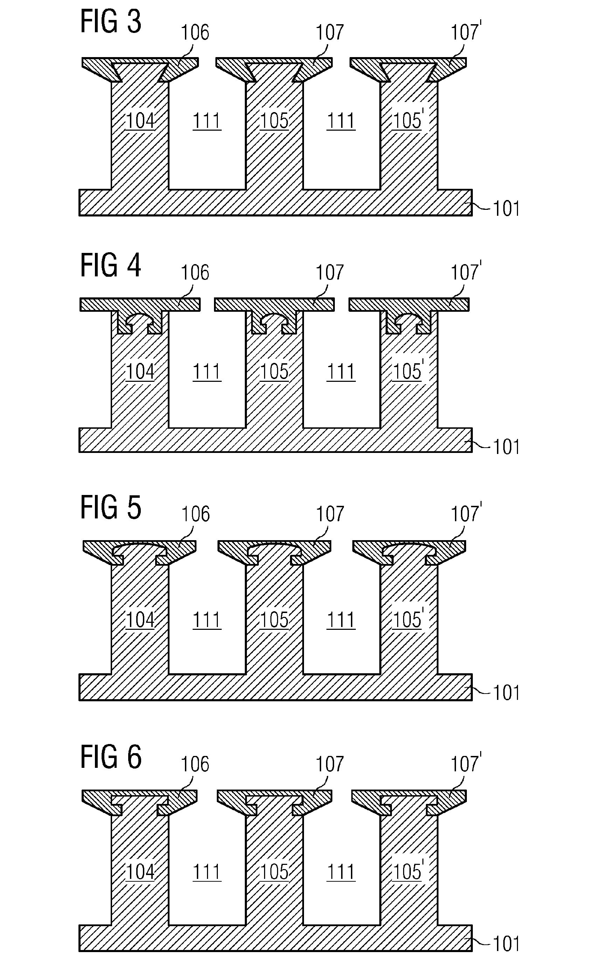

Fig. 3 to Fig. 7 show different exemplary embodiments of tongue and groove connections according to exemplary embodiments of the present invention.

Fig. 3 shows a dovetail connection, wherein the exemplary embodiments in Fig. 4 to Fig. 7 show tongue elements 203 comprising an ambos-like shape.

Specifically, in Fig. 4, the stator teeth 104, 105, 105' comprise respective grooves at its free ends 202, wherein inside the free ends, the respective tongue elements 203 are formed.

Fig. 8 shows a further exemplary embodiment of the stator, wherein along the circumferential direction 103 the stator tooth 104 and two further stator teeth 105, 105' are arranged at the stator body 101. The tooth tip cover 106 and the further tooth tip covers 107, 107' are formed in such a way, that gaps 801 between the respective tooth tip covers 106, 107, 107' are formed. This may be beneficial in order to provide a proper flux of the magnetic flow. In order to close the gaps, gap cover elements 801, for example resin elements, are inserted between the tooth tip cover 106 and the further tooth tip cover 107, 107' for closing the gap. Furthermore, the windings 112 which may be interposed into the slots 111 are protected from environmental influences.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Stator for an electrical machine, the stator comprising a stator body (101),
wherein the stator body (101) is divided along a centre axis (109) of the stator body (101) at least in a first stator segment (113) and a second stator segment (114),
wherein the first stator segment (113) comprises a stator tooth (104) and a tooth tip cover (106),
wherein the stator tooth (104) extents from a surface (201) of the first stator segment (113) along a radial direction (102) with respect to the centre axis (109) and has a free end (202),
wherein the tooth tip cover (106) is mounted to the free end (202) of the stator tooth (104) in a detachable manner, wherein the first stator segment (113) comprises a further stator tooth (105) and a further tooth tip cover (107), wherein the further stator tooth (105) extents from the surface (201) of the first stator segment (113) along the radial direction (102) and has a further free end,
wherein the further stator tooth (105) is arranged adjacent to the stator tooth (104) along the circumferential direction (103) such that a slot (111) between the stator tooth (104) and the further stator tooth (105) is formed,
wherein the further tooth tip cover (107) is mounted to the further free end of the further stator tooth (105) in a detachable manner,
wherein the tooth tip cover (106) and the further tooth tip cover (107) are formed in such a way that a gap between the tooth tip cover (106) and the further tooth tip cover (107) exists, and
a gap cover element (801) which is inserted between the tooth tip cover (106) and the further tooth tip cover (107) for closing the gap.

2. Stator according to claim 1,
wherein the tooth tip cover (106) has a larger extension along a circumferential direction (103) around the centre axis (109) than an extension of the stator tooth (104) along the circumferential direction (103).

3. Stator according to claim 1 or 2,
wherein the tooth tip cover (106) and the stator tooth (104) form a tongue and groove connection, in particular a dovetail connection.

4. Stator according to claim 3,
wherein the stator tooth (104) comprises at its free end (202) a tongue element (203),
wherein the tooth tip cover (106) comprises a groove (204) which has a complementary shape with respect to the tongue element (203) such that the tongue and groove connection is established.

5. Stator according to one of the claims 1 to 4, further comprising
a winding (112) which is inserted into the slot (111).

6. Stator according to one of the claims 1 to 5,
wherein the stator tooth (104) is a first stator tooth (104) and the tooth tip cover (106) is a first tooth tip cover (106),
wherein the second stator segment (114) comprises a second stator tooth and a second tooth tip cover,
wherein the second stator tooth extents from a further surface of the second stator segment (114) along the radial direction (102) and has a further free end, and
wherein the second tooth tip cover is mounted to the further free end of the second stator tooth in a detachable manner.

7. Wind turbine comprising
an electrical machine, in particular a generator,
wherein the electrical machine comprises a stator according to one of the claims 1 to 6.

8. Method of assembling a stator comprising a stator body (101) which has a tubular profile with a ring shaped cross sectional shape,
wherein the stator body (101) is divided along a centre axis (109) of the stator body (101) at least in a first stator segment (113) and a second stator segment (114),
wherein the first stator segment (113) comprises a stator tooth (104) and a tooth tip cover (106),
wherein the stator tooth (104) extents from a surface (201) of the first stator segment (113) along a radial direction (102) with respect to the centre axis (109) and has a free end (202),
wherein the first stator segment (113) comprises a further stator tooth (105) and a further tooth tip cover (107), wherein the further stator tooth (105) extents from the surface (201) of the first stator segment (113) along the radial direction (102) and has a further free end,
wherein the further stator tooth (105) is arranged adjacent to the stator tooth (104) along the circumferential direction (103) such that a slot (111) between the stator tooth (104) and the further stator tooth (105) is formed,
wherein the further tooth tip cover (107) is mounted to the further free end of the further stator tooth (105) in a detachable manner,
the method comprising
mounting the tooth tip cover (106) to the free end (202) of the stator tooth (104),
mounting the further tooth tip cover (107) to the free end of the further stator tooth (105),
wherein the tooth tip cover (106) and the further tooth tip cover (107) are formed in such a way that a gap between the tooth tip cover (106) and the further tooth tip cover (107) exists,
inserting a gap cover element (801) between the tooth tip cover (106) and the further tooth tip cover (107) for closing the gap, and
mounting the first stator segment (113) to the second stator segment (114).

9. Method according to claim 8,
wherein the first stator segment (113) comprises a further stator tooth (105) and a further tooth tip cover (107), wherein the further stator tooth (105) extents from the surface (201) of the first stator segment (113) along the radial direction (102) and has a further free end,
wherein the further tooth tip cover (107) is arranged adjacent to the tooth tip cover (106) along the circumferential direction (103) such that a slot (111) between the tooth tip cover (106) and the further tooth tip cover (107) is formed, the method further comprising
inserting a winding (112) into the slot (111) before mounting the tooth tip cover (106) to the free end (202) of the stator tooth (104), then
mounting the tooth tip cover (106) to the free end (202) of the stator tooth (104) in a detachable manner, and then
mounting the further tooth tip cover (107) to the further free end of the further stator tooth (105).

10. Method according to claim 8 or 9,
mounting the first stator segment (113) to the second stator segment (114) after the tooth tip cover (106) is mounted to the free end (202) of the stator tooth (104).

## Patentansprüche

1. Stator für eine elektrische Maschine, der Folgendes umfasst:
einen Statorkörper (101),
wobei der Statorkörper (101) an einer Mittelachse (109) des Statorkörpers (101) entlang zumindest in ein erstes Statorsegment (113) und ein zweites Statorsegment (114) aufgeteilt ist,
wobei das erste Statorsegment (113) einen Statorzahn (104) und eine Zahnspitzenabdeckung (106) umfasst,
wobei der Statorzahn (104) von einer Oberfläche (201) des ersten Statorsegments (113) aus in Bezug auf die Mittelachse (109) in einer radialen Richtung (102) verläuft und ein freies Ende (202) aufweist,
wobei die Zahnspitzenabdeckung (106) auf abnehmbare Weise an dem freien Ende (202) des Statorzahns (104) angebracht ist,
wobei das erste Statorsegment (113) einen weiteren Statorzahn (105) und eine weitere Zahnspitzenabdeckung (107) umfasst,
wobei der weitere Statorzahn (105) von der Oberfläche (201) des ersten Statorsegments (113) aus in radialer Richtung (102) verläuft und ein weiteres freies Ende aufweist,
wobei der weitere Statorzahn (105) in Umfangsrichtung (103) so neben dem Statorzahn (104) angeordnet ist, dass zwischen dem Statorzahn (104) und dem weiteren Statorzahn (105) ein Schlitz (111) gebildet wird,
wobei die weitere Zahnspitzenabdeckung (107) auf abnehmbare Weise an dem weiteren freien Ende des weiteren Statorzahns (105) angebracht ist,
wobei die Zahnspitzenabdeckung (106) und die weitere Zahnspitzenabdeckung (107) so gebildet sind, dass ein Spalt zwischen der Zahnspitzenabdeckung (106) und der weiteren Zahnspitzenabdeckung (107) besteht, und
ein Spaltabdeckungselement (801), das zum Schließen des Spalts zwischen die Zahnspitzenabdeckung (106) und die weitere Zahnspitzenabdeckung (107) eingefügt ist.

2. Stator nach Anspruch 1,
wobei die Zahnspitzenabdeckung (106) in einer Umfangsrichtung (103) um die Mittelachse (109) eine größere Ausdehnung aufweist als der Statorzahn (104) in der Umfangsrichtung (103).

3. Stator nach Anspruch 1 oder 2,
wobei die Zahnspitzenabdeckung (106) und der Statorzahn (104) eine Nut-und-Feder-Verbindung, insbesondere eine Schwalbenschwanzverbindung, bilden.

4. Stator nach Anspruch 3,
wobei der Statorzahn (104) an seinem freien Ende (202) ein Federelement (203) umfasst,
wobei die Zahnspitzenabdeckung (106) eine Nut (204) mit einer komplementären Form in Bezug auf das Federelement (203) umfasst, so dass die Nut-und-Feder-Verbindung entsteht.

5. Stator nach einem der Ansprüche 1 bis 4, der ferner Folgendes umfasst:
eine Wicklung (112), die in den Schlitz (111) eingefügt ist.

6. Stator nach einem der Ansprüche 1 bis 5,
wobei es sich bei dem Statorzahn (104) um einen ersten Statorzahn (104) und bei der Zahnspitzenabdeckung (106) um eine erste Zahnspitzenabdeckung (106) handelt,
wobei das zweite Statorsegment (114) einen zweiten Statorzahn und eine zweite Zahnspitzenabdeckung umfasst,
wobei der zweite Statorzahn von einer weiteren Oberfläche des zweiten Statorsegments (114) aus in radialer Richtung (102) verläuft und ein weiteres freies Ende aufweist und
wobei die zweite Zahnspitzenabdeckung auf abnehmbare Weise an dem weiteren freien Ende des zweiten Statorzahns angebracht ist.

7. Windenergieanlage, die Folgendes umfasst:
eine elektrische Maschine, insbesondere einen Generator, wobei die elektrische Maschine einen Stator nach einem der Ansprüche 1 bis 6 umfasst.

8. Verfahren zum Zusammensetzen eines Stators, der einen Statorkörper (101) umfasst, welcher ein rohrförmiges Profil mit einer ringförmigen Querschnittsform aufweist,
wobei der Statorkörper (101) an einer Mittelachse (109) des Statorkörpers (101) entlang zumindest in ein erstes Statorsegment (113) und ein zweites Statorsegment (114) aufgeteilt ist,
wobei das erste Statorsegment (113) einen Statorzahn (104) und eine Zahnspitzenabdeckung (106) umfasst,
wobei der Statorzahn (104) von einer Oberfläche (201) des ersten Statorsegments (113) aus in Bezug auf die Mittelachse (109) in einer radialen Richtung (102) verläuft und ein freies Ende (202) aufweist,
wobei das erste Statorsegment (113) einen weiteren Statorzahn (105) und eine weitere Zahnspitzenabdeckung (107) umfasst,
wobei der weitere Statorzahn (105) von der Oberfläche (201) des ersten Statorsegments (113) aus in radialer Richtung (102) verläuft und ein weiteres freies Ende aufweist,
wobei der weitere Statorzahn (105) in Umfangsrichtung (103) so neben dem Statorzahn (104) angeordnet ist, dass zwischen dem Statorzahn (104) und dem weiteren Statorzahn (105) ein Schlitz (111) gebildet wird,
wobei die weitere Zahnspitzenabdeckung (107) auf abnehmbare Weise an dem weiteren freien Ende des weiteren Statorzahns (105) angebracht ist,
wobei das Verfahren Folgendes umfasst:
Anbringen der Zahnspitzenabdeckung (106) an dem freien Ende (202) des Statorzahns (104),
Anbringen der weiteren Zahnspitzenabdeckung (107) an dem freien Ende des weiteren Statorzahns (105),
wobei die Zahnspitzenabdeckung (106) und die weitere Zahnspitzenabdeckung (107) so gebildet sind, dass ein Spalt zwischen der Zahnspitzenabdeckung (106) und der weiteren Zahnspitzenabdeckung (107) besteht,
Einfügen eines Spaltabdeckungselements (801) zwischen die Zahnspitzenabdeckung (106) und die weitere Zahnspitzenabdeckung (107) zum Schließen des Spalts und
Anbringen des ersten Statorsegments (113) am zweiten Statorsegment (114).

9. Verfahren nach Anspruch 8,
wobei das erste Statorsegment (113) einen weiteren Statorzahn (105) und eine weitere Zahnspitzenabdeckung (107) umfasst,
wobei der weitere Statorzahn (105) von der Oberfläche (201) des ersten Statorsegments (113) aus in radialer Richtung (102) verläuft und ein weiteres freies Ende aufweist,
wobei die weitere Zahnspitzenabdeckung (107) in Umfangsrichtung (103) so neben der Zahnspitzenabdeckung (106) angeordnet ist, dass zwischen der Zahnspitzenabdeckung (106) und der weiteren Zahnspitzenabdeckung (107) ein Schlitz (111) gebildet wird,
wobei das Verfahren ferner Folgendes umfasst:
Einfügen einer Wicklung (112) in den Schlitz (111) vor dem Anbringen der Zahnspitzenabdeckung (106) an dem freien Ende (202) des Statorzahns (104), dann
Anbringen der Zahnspitzenabdeckung (106) auf abnehmbare Weise an dem freien Ende (202) des Statorzahns (104) und dann
Anbringen der weiteren Zahnspitzenabdeckung (107) an dem weiteren freien Ende des weiteren Statorzahns (105).

10. Verfahren nach Anspruch 8 oder 9,
Anbringen des ersten Statorsegments (113) an dem zweiten Statorsegment (114) nach dem Anbringen der Zahnspitzenabdeckung (106) an dem freien Ende (202) des Statorzahns (104).

## Revendications

1. Stator pour une machine électrique, le stator comprenant un corps de stator (101),
où le corps de stator (101) est divisé le long d'un axe central (109) du corps de stator (101), au moins en un premier segment de stator (113) et en un deuxième segment de stator (114),
où le premier segment de stator (113) comprend une dent de stator (104) et une protection (106) de la pointe de la dent,
où la dent de stator (104) s'étend à partir d'une surface (201) du premier segment de stator (113), le long d'une direction radiale (102) par rapport à l'axe central (109), et a une extrémité libre (202),
où la protection (106) de la pointe de la dent est montée sur l'extrémité libre (202) de la dent de stator (104), de manière détachable,
où le premier segment de stator (113) comprend une autre dent de stator (105) et une protection (107) de la pointe de l'autre dent,
où l'autre dent de stator (105) s'étend à partir de la surface (201) du premier segment de stator (113), le long de la direction radiale (102), et a une autre extrémité libre,
où l'autre dent de stator (105) est agencée en étant adjacente à la dent de stator (104) le long de la direction circonférentielle (103), de sorte qu'une fente (111) est formée entre la dent de stator (104) et l'autre dent de stator (105),
où la protection (107) de la pointe de l'autre dent est montée sur l'autre extrémité libre de l'autre dent de stator (105), de manière détachable,
où la protection (106) de la pointe de la dent et la protection (107) de la pointe de l'autre dent sont formées de manière telle, qu'il existe un intervalle entre la protection (106) de la pointe de la dent et la protection (107) de la pointe de l'autre dent, et comprenant
un élément (801) de protection de l'intervalle, élément qui est inséré entre la protection (106) de la pointe de la dent et la protection (107) de la pointe de l'autre dent, pour fermer l'intervalle.

2. Stator selon la revendication 1,
dans lequel la protection (106) de la pointe de la dent a une extension, le long d'une direction circonférentielle (103) autour de l'axe central (109), plus grande qu'une extension de la dent de stator (104) le long de la direction circonférentielle (103).

3. Stator selon la revendication 1 ou 2,
dans lequel la protection (106) de la pointe de la dent et la dent de stator (104) forment un assemblage à languette et rainure, en particulier un assemblage en queue d'aronde.

4. Stator selon la revendication 3,
dans lequel la dent de stator (104) comprend, au niveau de son extrémité libre (202), un élément formant languette (203),
où la protection (106) de la pointe de la dent comprend une rainure (204) qui a une forme complémentaire par rapport à l'élément formant languette (203), de manière telle que l'assemblage à languette et rainure soit réalisé.

5. Stator selon l'une quelconque des revendications 1 à 4, comprenant en outre
un enroulement (112) qui est inséré dans la fente (111).

6. Stator selon l'une quelconque des revendications 1 à 5, dans lequel la dent de stator (104) est une première dent de stator (104) et la protection (106) de la pointe de la dent est une protection (106) de la pointe de la première dent,
où le deuxième segment de stator (114) comprend une deuxième dent de stator et une protection de la pointe de la deuxième dent,
où la deuxième dent de stator s'étend à partir d'une autre surface du deuxième segment de stator (114), le long de la direction radiale (102), et a une autre extrémité libre, et où la protection de la pointe de la deuxième dent est montée sur l'autre extrémité libre de la deuxième dent de stator, de manière détachable.

7. Eolienne comprenant
une machine électrique, en particulier une génératrice,
où la machine électrique comprend un stator selon l'une quelconque des revendications 1 à 6.

8. Procédé d'assemblage d'un stator comprenant un corps de stator (101) qui a un profil tubulaire ayant en section la forme d'un anneau,
où le corps de stator (101) est divisé le long d'un axe central (109) du corps de stator (101), au moins en un premier segment de stator (113) et en un deuxième segment de stator (114),
où le premier segment de stator (113) comprend une dent de stator (104) et une protection (106) de la pointe de la dent,
où la dent de stator (104) s'étend à partir d'une surface (101) du premier segment de stator (113), le long d'une direction radiale (102) par rapport à l'axe central (109), et a une extrémité libre (202),
où le premier segment de stator (113) comprend une autre dent de stator (105) et une protection (107) de la pointe de l'autre dent,
où l'autre dent de stator (105) s'étend à partir de la surface (201) du premier segment de stator (113), le long de la direction radiale (102), et a une autre extrémité libre,
où l'autre dent de stator (105) est agencée en étant adjacente à la dent de stator (104) le long de la direction circonférentielle (103), de sorte qu'une fente (111) est formée entre la dent de stator (104) et l'autre dent de stator (105),
où la protection (107) de la pointe de l'autre dent est montée sur l'autre extrémité libre de l'autre dent de stator (105), de manière détachable,
le procédé comprenant
le montage de la protection (106) de la pointe de la dent sur l'extrémité libre (202) de la dent de stator (104),
le montage de la protection (107) de la pointe de l'autre dent sur l'extrémité libre de l'autre dent de stator (105), où la protection (106) de la pointe de la dent et la protection (107) de la pointe de l'autre dent sont formées de manière telle, qu'il existe un intervalle entre la protection (106) de la pointe de la dent et la protection (107) de la pointe de l'autre dent,
l'insertion d'un élément (801) de protection de l'intervalle existant entre la protection (106) de la pointe de la dent et la protection (107) de la pointe de l'autre dent, pour fermer l'intervalle, et
le montage du premier segment de stator (113) sur le deuxième segment de stator (114).

9. Procédé selon la revendication 8,
dans lequel le premier segment de stator (113) comprend une autre dent de stator (105) et une protection (107) de la pointe de l'autre dent,
où l'autre dent de stator (105) s'étend à partir de la surface (201) du premier segment de stator (113), le long de la direction radiale (102), et a une autre extrémité libre,
où la protection (107) de la pointe de l'autre dent est agencée en étant adjacente à la protection (106) de la pointe de la dent le long de la direction circonférentielle (103), de sorte qu'une fente (111) est formée entre la protection (106) de la pointe de la dent et la protection (107) de la pointe de l'autre dent, le procédé comprenant en outre
l'insertion d'un enroulement (112) dans la fente (111) avant le montage de la protection (106) de la pointe de la dent sur l'extrémité libre (202) de la dent de stator (104), puis
le montage de la protection (106) de la pointe de la dent sur l'extrémité libre (202) de la dent de stator (104), de manière détachable et, ensuite,
le montage de la protection (107) de la pointe de l'autre dent sur l'autre extrémité libre de l'autre dent de stator (105).

10. Procédé selon la revendication 8 ou 9,
dans lequel le montage du premier segment de stator (113) sur le deuxième segment de stator (114) est réalisé, une fois que la protection (106) de la pointe de la dent a été montée sur l'extrémité libre (202) de la dent de stator (104).
